# EUROPÄISCHE PATENTANMELDUNG

(11) **EP 1 458 161 A1**
(43) Veröffentlichungstag der Anmeldung: **15.09.2004**
(21) Anmeldenummer: 03005848.1
(22) Anmeldetag: 14.03.2003
(51) Int. Cl.: H04L 29/06, H04Q 7/22, H04L 12/58, H04L 29/08

(54) **Verfahren und Vorrichtung für die Interoperabilität zwischen den Präsenz-Services gemäss dem Wireless Village Standard und dem IP Multimedia Subsystem Standard**

(71) Anmelder: SIEMENS AKTIENGESELLSCHAFT, 80333 München (DE)
(72) Erfinder: Beckmann, Mark, 38102 Braunschweig (DE); Choi, Hyung-Nam, 22117 Hamburg (DE); Luft, Achim, 38120 Braunschweig (DE)

(57) **Zusammenfassung**

Eine Interoperabilität der Präsenz-Services gemäß dem Wireless Village und dem IP Multimedia Subsystem Standards wird beschrieben durch das Verfahren und der Vorrichtung zum Einschreiben von Präsenz-Attributen des Open Mobile Alliance OMA Wireless-Village-Standards IMPS in eine Präsenz-Informations-Nachricht des 3GPP IP-Multimedia-Subsystem-Standards in einem mobilen Kommunikationsnetz, dadurch gekennzeichnet, dass mindestens eine Text-Zeichenfolge eine Präsenz-Attributes des Wireless-Village-Standards von einer Abbildungseinheit 3GPP in ein Note-Element einer Präsenz-Informations-Nachricht des IP-Multimedia-Subsystem-Standards eingeschrieben wird und dass die Präsenz-Informations-Nachricht zum Weiterleiten an weitere Netzeinheiten IMPS an einen Präsenz-Server übermittelt wird.

## Beschreibung

Die Erfindung betrifft ein Verfahren und eine Vorrichtung zum Einschreiben von Präsenz-Attributen des Wireless-Village-Standards in eine Präsenz-Informations-Nachricht des IP-Multimedia-Subsystem-Standards in einem mobilen Kommunikationsnetz.

In einem mobilen Kommunikationsnetz gibt es mehrere Standards bezüglich der Abfrage von Präsenz-Informationen eines Mobilfunkendgerätes und seines Nutzers. Derzeit wird der Wireless-Village (WV)-Standard und der 3GPP IP Multimedia Subsystem (IMS)-Standard verwendet. Im Wireless Village Standard sind viele explizite Attribute eines Mobilfunkendgerätes bzw. Nutzers eines Mobilfunkendgerätes definiert. Einige dieser Attribute haben als Wertebereich eine Text-Zeichenfolge. Die im 3GPP IMS Präsenz Service verwendeten Attribute basieren auf einer, in der IETF (Internet Engineering Task Force) spezifizierten Lösung, welche in draft-ietf-impp-cpim-pidf spezifiziert ist. Dort ist festgelegt, dass Präsenz Informationen auf folgenden Einzel-Informationen bestehen:
- einem Identifikator für den Nutzer eines Mobilfunkendgerätes
- ein oder mehrere sogenannter Präsenz-Tupeln
- ein oder mehrere sogenannter Note-Elemente, die Text-Informationen enthalten können

Bislang ist es nicht möglich, dass ein Mobilfunkendgerät, dass nur den 3GPP IMS Standard unterstützt, trotzdem Präsenz-Informationen von Nutzern eines Mobilfunkendgerätes abfragen kann, das nur den WV-Standard unterstützt und umgekehrt. In der 3GPP Spezifikation 23.141 [1] ist derzeit nur beschrieben, dass in einem Netzwerk eine Netzwerkeinheit enthalten sein kann, welche eine Transponation von einem zum anderen Standard durchführt. In der Spezifikation ist jedoch nicht beschrieben, wie eine solche Transponation aussehen könnte.

Die Aufgabe der vorliegenden Erfindung besteht deshalb darin, dass die Interoperabilität der Präsenz Services gemäß dem Wireless Village Standards und dem 3GPP IP Multimedia Subsystem Standard verbessert wird.

Die Aufgabe wird erfindungsgemäß jeweils durch die Gegenstände der unabhängigen Patentansprüche gelöst. Weiterbildungen der Erfindung sind in den Unteransprüchen angegeben. Kern der Erfindung ist, dass Attribute des WV-Standards, die mit Hilfe von Text-Zeichenfolgen dargestellt werden, in Note-Elemente einer Präsenz-Informations-Nachricht des IMS-Standards eingeschrieben werden. Außerdem erhält die Text-Zeichenfolge im Note-Element einen Zusatz betreffend eine eindeutige Zuordnungsmöglichkeit zu dem Präsenz-Attribut des Wireless-Village-Standards, der durch ein Trennzeichen (z. B. ein Doppelpunkt) getrennt von der Text-Zeichenfolge ist. Der Zusatz könnte z. B. aus dem Namen des Attributes bestehen und hat den Zweck, dass die Text-Zeichenfolgen wieder in WV-Attribute umgewandelt werden können. Der Vorteil der Erfindung liegt darin, dass Netzwerk-Anbietern die Möglichkeit gegeben wird, einen IMS-Präsenz-Server für Präsenz-Informationen zu verwenden und trotzdem Mobilfunkendgeräte bedienen zu können, die den WV-Standard unterstützen.

Die Erfindung wird anhand eines in den Figuren dargestellten Ausführungsbeispiels näher erläutert. Im Einzelnen zeigen
- Figur 1: eine Tabelle A mit den Attributen gemäß des WV-Standards,
- Figur 2: eine Tabelle B der eingeschriebenen Text-Zeichenfolgen in Note-Elementen,
- Figur 3: eine vereinfachte Netzwerk-Architektur,
- Figur 4: eine Tabelle C der enthaltenen Präsenz-Informationen,
- Figur 5: den Ablauf wie das Mobilfunkendgerät die auf dem Präsenz Server gespeicherten Informationen abfragt.

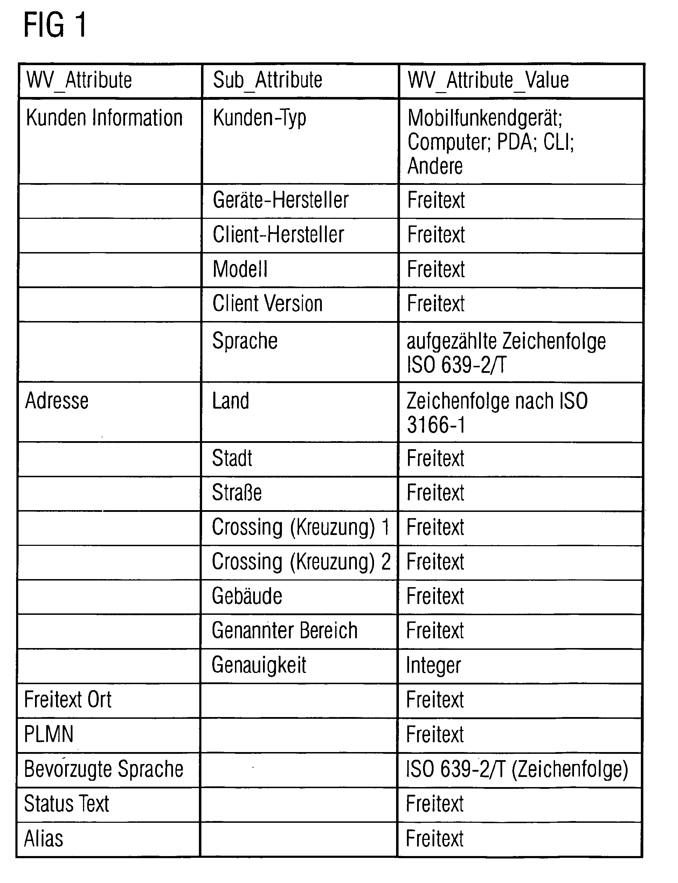

Figur 1 zeigt in einer Tabelle die Attribute gemäß dem WV-Standard, die als Text-Zeichenfolgen in den Note-Elementen der IMS Präsenz-Informationen dargestellt werden können. Wie in der letzten Spalte zu sehen ist, handelt es sich bei dem Wertebereich des Kundentyps, des Sprach-Attributes, des Landes und der Genauigkeit des Adressen Attributes um festgelegte Werte, d. h., dass andere Werte als die, die angegeben sind, nicht zulässig sind. Der Wertebereich wird als eine Text-Zeichenfolge dargestellt.

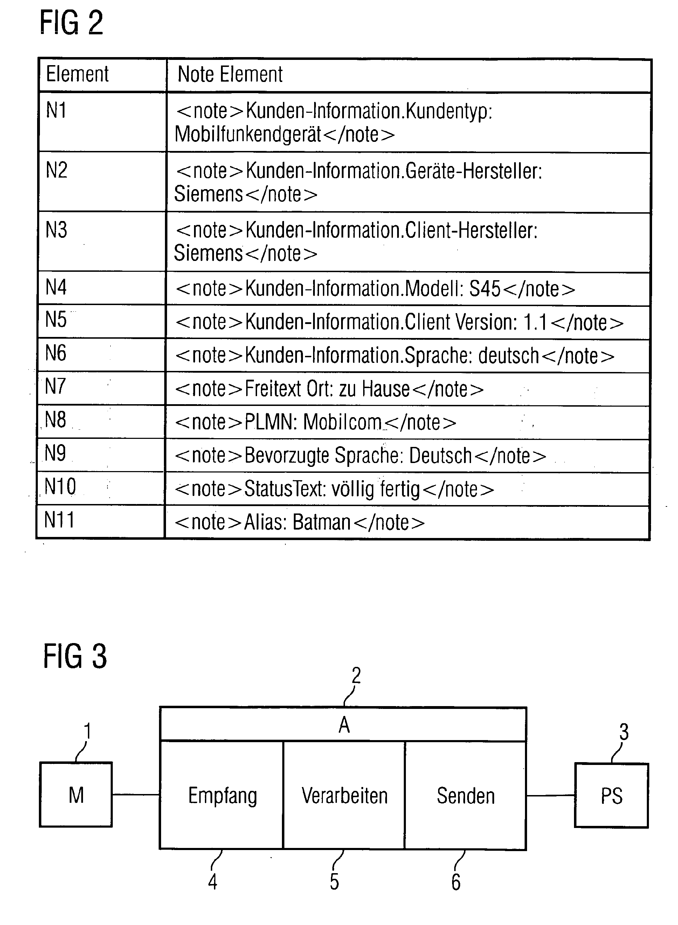

Figur 2 zeigt, wie die Attribute gemäß dem WV-Standard, die als Text-Zeichenfolgen dargestellt sind in Note-Elemente eingeschrieben werden. In diesem Ausführungsbeispiel wird der Name von der Text-Zeichenfolge mit Hilfe eines Doppelpunktes getrennt. Der Name des Attributes stellt eine eindeutige Zuordnungsmöglichkeit dar. Um Subattribute auch eindeutig identifizieren zu können, wird außerdem das Hauptattribut vom Subattribut mit Hilfe eines Punktes "." getrennt. Dies ist notwendig, da z. B. das Attribut "Sprache " für mehrere Hauptattribute existiert. Eine andere Möglichkeit wäre es, wenn für jedes WV-Attribute eine eigene Erweiterung des Attributes für die IMS-Präsenz-Informationen definiert würde. Dies würde bedeuten, dass das beschriebene Präsenz-Datenformat CPIM-PIDF mit seinen Tupel erweitert werden müsste. Der kennzeichnende Zusatz könnte innerhalb der Mobilfunk-Standardisierungs-Gremien (3GPP, OMA, etc.) spezifiziert werden.

Figur 3 zeigt eine vereinfachte Architektur, bestehend aus einer Mobilfunkstation 1, einer Abbildungseinheit 2 und einem IMS Präsenz Server 3. Um Mobilfunkendgeräte 1 unterstützen zu können, die eine Präsenz Anwendung gemäß dem Wireless Village Standard implementiert haben, wird in einem mobilen Kommunikationsnetz eine Abbildungseinheit 2 eingerichtet. Die Abbildungseinheit 2 besteht aus einer Empfangseinheit 4 zum Empfangen von Nachrichten gemäß den beiden Standards, einer Verarbeitungseinheit 5 und einer Sendeeinheit 6. Diese Abbildungseinheit 2 kommuniziert mit dem Mobilfunkendgerät über eine Verbindung gemäß dem WV Standards und mit einem IMS Präsenz Server 3 gemäß dem IMS Präsenz Standard. Der IMS Präsenz Standard ist definiert mit Hilfe des Session Initiation Protocols (SIP) und notwendigen Erweiterungen des SIP-Protokolls, wie z. B. dem Ereignis-Notifizierungs-Rahmenwerk (Event Notification Framework).

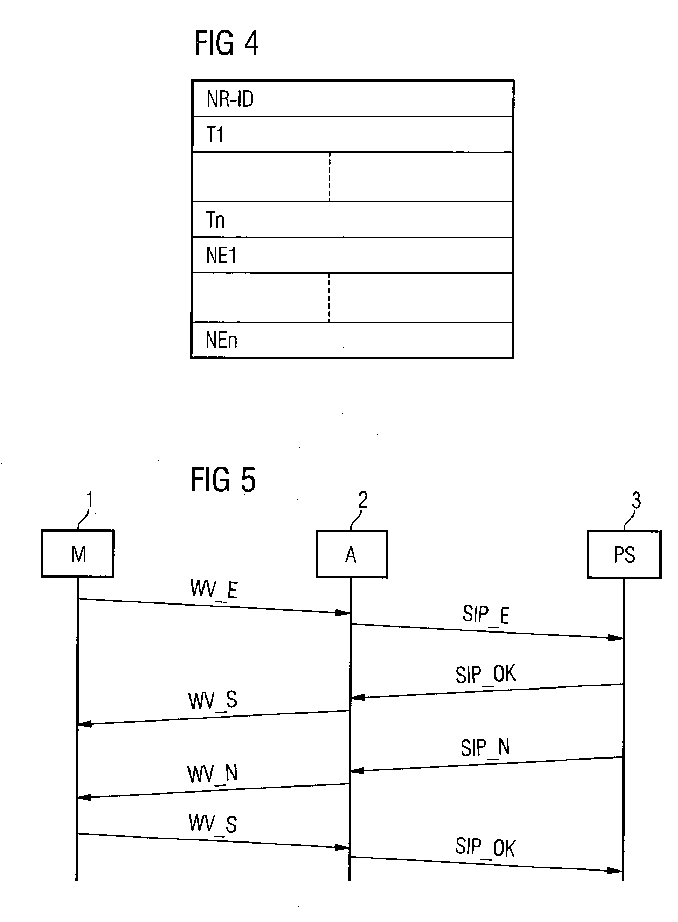

Figur 4 zeigt, wie die Präsenz-Informationen eines Nutzers eines Mobilfunkendgerätes 1 aussehen, die auf dem Präsenz-Server 3 abgelegt werden. Im Feld NR-ID ist die Identität des Nutzers NR eines Mobilfunkendgerätes 1 enthalten. In den Feldern T₁ - Tₙ sind die Präsenz-Tupel enthalten. Die Präsenz-Tupel enthalten die Informationen über die Eigenschaften eines Nutzers eines Mobilfunkendgerätes 1, also z. B. wie der Nutzer erreichbar ist, in welcher Stimmung es sich gerade befindet usw.. In den Elementen N₁ - Nₙ sind die Note-Elemente enthalten, welche die Text-Zeichenfolgen beinhalten. In diesem Ausführungsbeispiel wird angenommen, dass die in Tabelle A aufgelisteten Attribute alle in den Note-Elementen enthalten sind. Der Einfachheithalber wird lediglich das Adressen-Attribut nicht verwendet. Die Verwendung des Adressen-Attribut ist z. B. für den Fall notwendig, wenn der Nutzer eines Mobilfunkendgerätes 1 den Präsenz Service gemäß dem WV Standard verwendet. Die Attribute können in den Note-Elementen abgelegt werden und dadurch können diese Informationen für den IMS Präsenz Service verwendet werden. Der Netzwerk-Anbieter muss somit nur einen IMS-Präsenz-Server 3 bereitstellen.

Figur 5 zeigt den Ablauf, wie ein Mobilfunkendgerät 1 Präsenz-Informationen bei einem Präsenz Server 3 abfragt. Dazu sendet das Mobilfunkendgerät 1 eine Einschreibungs-Nachricht WV_E gemäß dem WV-Standard an eine Netzeinheit, die derart ausgestaltet ist, dass sie die WV-Nachricht erkennt und die Nachricht an eine Abbildungseinheit 2 weiterleitet. Die Abbildungseinheit 2 sendet nach Erhalt der Nachricht über eine Empfangseinheit 4 eine SIP-Nachricht SIP_E an einen IMS-Präsenz-Server 3 mit einer Sendeeinheit 6. Die Erstellung der Nachricht erfolgt in einer Verarbeitungseinheit 5. Der IMS-Präsenz-Server 3 bestätigt die Einschreibung mit einer SIP-Nachricht SIP_OK. Nach Erhalt dieser Nachricht sendet die Abbildungseinheit 2 dem Mobilfunkendgerät 1 die WV-Nachricht "Status". Damit ist das Mobilfunkendgerät 1 erfolgreich bei dem IMS-Präsenz-Server 3 eingeschrieben.
Als nächstes sendet der IMS-Präsenz-Server 3 eine Notifizierungsnachricht SIP_N an die Abbildungseinheit 2. Diese Nachricht enthält die Präsenz-Informationen, wie sie in Figur 4 dargestellt sind. Die Note-Elemente sind dabei in Form der Figur 2 enthalten. Die Abbildungseinheit 2 weiß, dass die Note-Elemente am Anfang eine eindeutige Kennzeichnung (z. B. den Namen der Attribute) enthalten, welche durch ein Trennzeichen (z. B. Doppelpunkt) von den Attributs-Werten (Text-Zeichenfolge) getrennt sind. Dadurch kann die Abbildungseinheit 2 die WV Notifizierungsnachricht WV_N erstellen und die Attribute in dieser Notifizierungsnachricht mit den Inhalten der Note Elemente füllen. Wird ein Attributsnamen von der Abbildungseinheit 2 nicht erkannt, so wird dieses Note-Element als WV-Text-Attribut erstellt. Dies ist z. B. der Fall, wenn das Note-Element einen Text-Wert enthält, wie etwa "<note> Zufall: Hab' gerade meine Brille wiedergefunden <note>". Schließlich wird die WV-Nachricht WV_N an das Mobilfunkendgerät 1 gesendet, welches den Empfang der Nachricht mit einer WV_S Nachricht bestätigt. Die Abbildungseinheit 2 erstellt nach Erhalt dieser Nachricht eine SIP-Nachricht SIP_OK und sendet die SIP-Nachricht an den IMS-Präsenz-Server 3.

## Patentansprüche

1. Verfahren zum Einschreiben von Präsenz-Attributen des Wireless-Village-Standards in eine Präsenz-Informations-Nachricht des IP-Multimedia-Subsystem-Standards in einem mobilen Kommunikationsnetz,
**dadurch gekennzeichnet,**
**dass** mindestens eine Text-Zeichenfolge eines Präsenz-Attributes des Wireless-Village-Standards von einer Abbildungseinheit in ein Note-Element einer Präsenz-Informations-Nachricht des IP-Multimedia-Subsystem-Standards eingeschrieben wird und
**dass** die Präsenz-Informations-Nachricht zum Weiterleiten an weitere Netzeinheiten an einen Präsenz-Server übermittelt wird.

2. Verfahren nach einem der vorhergehenden Ansprüche,
**dadurch gekennzeichnet,**
**dass** eine in dem Note-Element eingeschriebene Text-Zeichenfolge mit einem Zusatz betreffend eine eindeutige Zuordnungsmöglichkeit zu dem Präsenz-Attribut des Wireless-Village-Standards gekennzeichnet wird.

3. Verfahren nach Anspruch 2,
**dadurch gekennzeichnet,**
**dass** durch den Zusatz die eingeschriebene Text-Zeichenfolge in einem Note-Element einer Präsenz Informations-Nachricht des IP-Multimedia-Subsystem-Standards in eine Präsenz-Informations-Nachricht des Wireless-Village-Standards eingeschrieben werden kann.

4. Verfahren nach einem der vorhergehenden Ansprüche,
**dadurch gekennzeichnet,**
**dass** zwischen dem Zusatz betreffend eine eindeutige Zuordnungsmöglichkeit und der eingeschriebenen Text-Zeichenfolge ein Trennzeichen ist.

5. Verfahren nach einem der vorhergehenden Ansprüche,
**dadurch gekennzeichnet,**
**dass** der Zusatz betreffend eine eindeutige Zuordnungsmöglichkeit aus dem Namen des Präsenz-Attributes besteht.

6. Verfahren nach einem der vorhergehenden Ansprüche,
**dadurch gekennzeichnet,**
**dass** die Präsenz-Informations-Nachricht eine Session-Initiation-Protokoll-(SIP)-Nachricht. ist.

7. Verfahren nach Anspruch 6,
**dadurch gekennzeichnet,**
**dass** die SIP-Nachricht mit dem Ereignis-Notifizierungs-Rahmenwerk erweitert ist.

8. Verfahren nach einem der vorhergehenden Ansprüche,
**dadurch gekennzeichnet,**
**dass** ein Text-Attribut gemäß dem Wireless-Village-Standard aus einem Note-Element erstellt wird, falls der Zusatz betreffend eine eindeutige Zuordnungsmöglichkeit von der Abbildungseinheit nicht erkannt wird.

9. Vorrichtung zum Einschreiben von Präsenz-Attributen des Wireless-Village-Standards in eine Präsenz-Informations-Nachricht des IP-Multimedia-Subsystem-Standards in einem mobilen Kommunikationsnetz,
- mit einer Empfangseinheit (4) in einer Abbildungseinheit (2) zum Empfangen von mindestens einer Text-Zeichenfolge eines Präsenz-Attributes des Wireless-Village-Standards
- mit einer Verarbeitungseinheit (5) zum Einschreiben der Text-Zeichenfolge in ein Note-Element einer Präsenz-Informations-Nachricht und
- mit einer Sendeeinheit (6) zum Weiterleiten der Präsenz-Informations-Nachricht an einen Präsenz-Server (3.
